(19) Europäisches Patentamt
European Patent Office
Office européen des brevets

(11) EP 4 611 012 A1

(12) EUROPEAN PATENT APPLICATION
published in accordance with Art. 153(4) EPC

(43) Date of publication:
**03.09.2025 Bulletin 2025/36**

(21) Application number: **23882525.1**

(22) Date of filing: **19.10.2023**

(51) International Patent Classification (IPC):
***H01G 9/00*** (2006.01) ***H01G 9/028*** (2006.01)

(52) Cooperative Patent Classification (CPC):
**H01G 9/00; H01G 9/028**

(86) International application number:
**PCT/JP2023/037836**

(87) International publication number:
**WO 2024/090320 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.10.2022 JP 2022170098**

(71) Applicant: **Idemitsu Kosan Co.,Ltd.**
**Tokyo 100-8321 (JP)**

(72) Inventors:
- **ONODERA, Shingo**
  **Tokyo 100-8321 (JP)**
- **BANDO, Toru**
  **Tokyo 100-8321 (JP)**

(74) Representative: **Gille Hrabal Partnerschaftsgesellschaft mbB**
**Patentanwälte**
**Brucknerstraße 20**
**40593 Düsseldorf (DE)**

# (54) METHOD FOR PRODUCING CONDUCTIVE POLYMER-CONTAINING POROUS BODY, SOLID ELECTROLYTIC CAPACITOR AND METHOD FOR PRODUCING SOLID ELECTROLYTIC CAPACITOR

(57) A method for producing a conductive polymer-containing porous body, including:
an immersion step (A) in which a part or all of a porous body including an oxide of a valve metal is immersed in a conductive polymer composition including a conductive polymer and a solvent,
a step (B) in which the porous body is taken out from the conductive polymer composition used in the immediately preceding immersion step, and it is retained for a predetermined retention time at a temperature which is lower than or equal to the boiling point of the solvent included in the conductive polymer composition used in the immediately preceding immersion step, and
an immersion step (C) in which the part or all of the porous body which has been subjected to the retention step (B) is immersed in the conductive polymer composition which is the same as the conductive polymer composition used in the immediately preceding immersion step, or a conductive polymer composition including a different conductive polymer and solvent.

Fig. 1

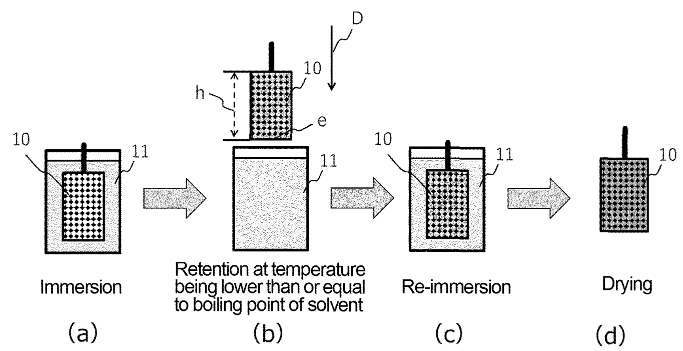




Processed by Luminess, 75001 PARIS (FR)

## Description

Technical Field

The present invention relates to a method for producing a conductive polymer-containing porous body, a solid electrolytic capacitor and a method for producing a solid electrolytic capacitor.

Background Art

In solid electrolytic capacitors such as an aluminium electrolytic capacitor and a tantalum capacitor, a conductive polymer is utilized as a material of solid electrolytic layers. In these solid electrolytic layers, a capacitor device composed of a porous body is immersed in a dispersion liquid or a solution of a conductive polymer (indicated as a conductive polymer composition in the below explanation), and the conductive polymer composition impregnated into the pores of the porous body is dried, thereby coating the porous surface to be formed as a layer (Patent Documents 1 to 3). In order to form a layer of a solid electrolyte in the pores of a porous body by these techniques, the immersing and drying of the porous body into a conductive polymer composition is performed at least twice or more.

Related Art Documents

Patent Documents

[Patent Document 1] JP 2014-030046 A
[Patent Document 2] JP 2021-534576 A
[Patent Document 3] JP 2021-534579 A

Summary of the Invention

In recent years, the efficient production of a higher performing capacitor is required in solid electrolytic capacitors. Therefore, it is required to increase the filling amount of a conductive polymer into the pores of a porous body, to increase of a coated surface area of a porous surface by the conductive polymer.

By the techniques of Patent Documents 1 to 3, however, in the process of immersing and drying a porous body into a conductive polymer composition, the pore openings of the porous body may be clogged by the film of a conductive polymer and the filling amount of the conductive polymer inside the pores of the porous body may not be sufficiently increased. Therefore, by the techniques of Patent Documents 1 to 3, it is required to repeat the immersion and drying of a porous body into a conductive polymer composition many times, which requires much time in the entirety of steps, and therefore, they have included a problem in terms of efficiency.

Moreover, by the techniques of Patent Documents 1 to 3, in the process of repeatedly performing immersion and drying of a porous body into a conductive polymer composition, the film of a conductive polymer formed at the pores of a porous body may be re-dissolved in a conductive polymer composition and the film may repeatedly swell and shrink, thereby peeling from the porous body. Therefore, even though the immersion of a porous body into a conductive polymer composition followed by drying is repeatedly performed, the filling amount of a conductive polymer in the pores of a porous body may not be sufficiently increased.

Accordingly, the efficiency of the production of a solid electrolytic capacitor cannot be raised by the techniques of Patent Documents 1 to 3, and moreover the dielectric loss tangent was easily increased.

The object of the present invention is to provide a method of efficiently producing a conductive polymer-containing porous body from which a solid electrolytic capacitor with a small dielectric loss tangent is obtainable.

According to the present invention, the following method for producing a conductive polymer-containing porous body and the like are provided.

1. A method for producing a conductive polymer-containing porous body, comprising:

an immersion step (A) in which a part or all of a porous body comprising an oxide of a valve metal is immersed in a conductive polymer composition comprising a conductive polymer and a solvent,
a step (B) in which the porous body is taken out from the conductive polymer composition used in the immediately preceding immersion step, and it is retained for a predetermined retention time at a temperature which is lower than or equal to the boiling point of the solvent included in the conductive polymer composition used in the

immediately preceding immersion step, and

an immersion step (C) in which the part or all of the porous body which has been subjected to the retention step (B) is immersed in the conductive polymer composition which is the same as the conductive polymer composition used in the immediately preceding immersion step, or a conductive polymer composition comprising a different conductive polymer and solvent.

2. The method for producing a conductive polymer-containing porous body according to 1, which comprises immersing a non-immersed part of the porous body in the conductive polymer composition after the part the porous body is immersed in the conductive polymer composition and the immersion state is retained.
3. The method for producing a conductive polymer-containing porous body according to 1 or 2, wherein the retention time is 1 second or more and less than 10 minutes in the step (B).
4. The method for producing a conductive polymer-containing porous body according to any one of 1 to 3, wherein the step (B) and the step (C) are repeated multiple times.
5. The method for producing a conductive polymer-containing porous body according to any one of 1 to 4, wherein the conductive polymer is one or more members selected from polyaniline, polyaniline derivative, polythiophene, polythiophene derivative, polypyrrole and polypyrrole derivative.
6. The method for producing a conductive polymer-containing porous body according to any one of 1 to 5, wherein the conductive polymer is a polyaniline complex in which a polyaniline is doped with a proton donor.
7. The method for producing a conductive polymer-containing porous body according to any one of 1 to 6, wherein the conductive polymer composition further comprises a phenolic compound.
8. The method for producing a conductive polymer-containing porous body according to any one of 1 to 7, wherein the conductive polymer composition further comprises a heat-resistant stabilizer.
9. A conductive polymer-containing porous body obtained by the method for producing a conductive polymer-containing porous body according to any one of 1 to 8.
10. A method for producing a solid electrolytic capacitor, comprising:

an immersion step (A) in which a part or all of an anode body being a porous body which comprises the surface composed of an oxide of a valve metal and which is composed of a valve metal is immersed in a conductive polymer composition comprising a conductive polymer and a solvent,

a step (B) in which the anode body is taken out from the conductive polymer composition used in the immediately preceding immersion step, and it is retained for a predetermined retention time at a temperature which is lower than or equal to the boiling point of the solvent included in the conductive polymer composition used in the immediately preceding immersion step,

an immersion step (C) in which the part or all of the anode body which has been subjected to the retention step (B) is immersed in the conductive polymer composition which is the same as the conductive polymer composition used in the immediately preceding immersion step, or a conductive polymer composition comprising a different conductive polymer and solvent, and

a drying step (D) in which the anode body is taken out from the conductive polymer composition, and it is dried at a temperature exceeding the boiling point of the solvent to form a solid electrolytic layer composed of the conductive polymer on the anode body.

11. The method for producing a solid electrolytic capacitor according to 10, which further comprises immersing the anode body on which the solid electrolytic layer has been formed in a conductive polymer composition comprising a conductive polymer and a solvent, and thereafter drying it to form an external coating layer.
12. A solid electrolytic capacitor obtained by the method for producing a solid electrolytic capacitor according to 10 or 11.
13. A porous body with a solid electrolytic layer comprising an oxide of a valve metal,

wherein the porous body with a solid electrolytic layer comprises a solid electrolytic layer comprising a polyaniline formed inside the pores of the porous body, and

a solid electrolytic layer comprising a polyaniline coated on the outer portion of the porous body.

14. A solid electrolytic capacitor comprising the porous body with a solid electrolytic layer according to 13, wherein an equivalent series resistance ESR thereof is 17 mΩ or less.

According to the present invention, a method of efficiently producing a conductive polymer-containing porous body from which a solid electrolytic capacitor with a small dielectric loss tangent is obtainable, can be provided.

Brief Description of the Drawings

Fig. 1 is a process drawing schematically showing a method for producing a conductive polymer-containing porous body of the present aspect.

Fig. 2 is a process drawing schematically showing a conventional method for producing a conductive polymer-containing porous body.

Mode for Carrying out the Invention

[Method for producing conductive polymer-containing porous body]

A method for producing a conductive polymer-containing porous body of the present aspect including:

an immersion step (A) in which a part or all of a porous body including an oxide of a valve metal is immersed in a conductive polymer composition including a conductive polymer and a solvent,

a step (B) in which the porous body is taken out from the conductive polymer composition used in the immediately preceding immersion step, and it is retained for a predetermined retention time at a temperature which is lower than or equal to the boiling point of the solvent included in the conductive polymer composition used in the immediately preceding immersion step, and

an immersion step (C) in which the part or all of the porous body which has been subjected to the retention step (B) is immersed in the conductive polymer composition which is the same as the conductive polymer composition used in the immediately preceding immersion step, or a conductive polymer composition including a different conductive polymer and solvent.

Fig. 1 shows a process drawing schematically describing a method for producing a conductive polymer-containing porous body of the present aspect.

Fig. 2 shows a process drawing schematically describing a conventional method for producing a conductive polymer-containing porous body.

When a porous body is immersed in a conductive polymer composition, a liquid film of the conductive polymer composition may be formed at these pore openings in a state where air is in the inner portion of the pores, which thereby becomes a liquid seal state where air is encapsulated inside the pores of the porous body.

When the porous body having pores in a liquid seal state is pulled up from the conductive polymer composition and conventional drying is performed (refer to Fig. 2(b)), the solvent component volatilizes from the liquid film, then solidification occurs, and a film of the conductive polymer is formed. Thus, when the porous body is immersed again in a conductive polymer composition (refer to Fig. 2(c)), infiltration of the conductive polymer composition into the pores is inhibited by the film of the conductive polymer at the pore openings. Thus, it becomes difficult to increase the filling amount of the conductive polymer composition into the pores.

Here, the "drying" in the conventional technique is normally performed at a temperature higher than the boiling point of a solvent contained in the conductive polymer composition.

In the production method of the present aspect, a porous body 10 immersed in a conductive polymer composition 11 is taken out once from the conductive polymer composition 11 into the air, and retained at a temperature which is lower than or equal to the boiling point of the solvent contained in the composition, in a state where the entire porous body is exposed to a space outside the conductive polymer composition 11 (refer to Fig. 1(b)). Thereby, the liquid film formed at the pore openings disappears, and air encapsulated inside the pores is removed by eliminating the liquid seal state formed at the porous body 10; thus, when the porous body 10 is immersed again in the conductive polymer composition 11 (refer to Fig. 1(c)), the conductive polymer composition 11 can be made to be impregnated until the depths of pores of the porous body 10. Moreover, the number of immersions in the conductive polymer composition 11 can thereby be reduced.

By repeatedly performing the step (B) and the step (C) mentioned above, even though a liquid seal state is temporarily formed on the porous body 10, air will be removed from the pores since the liquid seal state is eliminated during the subsequent step (B) (refer to Fig. 1(b)) and thus the immersion by the conductive polymer composition can be performed until a state where the thickness of a layer composed of the conductive polymer could be sufficiently ensured.

Moreover, as described below, by applying the method to the production of a solid electrolytic capacitor, a solid electrolytic layer composed of a conductive polymer can be formed until the depths of the pores, and thus a surface area coated by the conductive polymer, of a porous surface of a porous body is increased, and a low-loss solid electrolytic capacitor with a small dielectric loss tangent can be efficiently produced.

This is presumed to be due to a film (solid electrolytic layer) of a conductive polymer being densely formed at the

porous surface of a valve metal of a solid electrolytic capacitor, which thereby results in good conductivity inside the capacitor when a voltage is applied and a low resistance state.

Moreover, by applying the method in the production of a solid electrolytic capacitor, a surface area of a porous surface of a porous body, coated by the conductive polymer is increased, and thus a solid electrolytic capacitor with a small equivalent series resistance (ESR) and a large electrostatic capacitance can be produced.

In the present specification, the 'boiling point of the solvent' is the boiling point of the solvent contained in the conductive polymer composition, and when a plurality of solvents is contained in a conductive polymer composition, it means the boiling point of the solvent which shows the lowest boiling point among these.

The method for producing the conductive polymer-containing porous body of the present aspect will be explained below.

(Step (A))

First, a part or all of the porous body including the oxide of the valve metal is immersed in the conductive polymer composition including the conductive polymer and the solvent (immersion step).

Thereby, the conductive polymer composition is impregnated inside the pores of the porous body including an oxide of a valve metal (in the explanation below, it may simply be referred to as a "porous body").

Examples of the valve metal include aluminium, tantalum, niobium, titanium, hafnium, zirconium, zinc, tungsten, bismuth, and antimony, where aluminium or tantalum is preferable. Examples of the oxide of a valve metal include oxides of these metals.

Examples of the porous body including an oxide of a valve metal include a porous body consisting of an oxide of a valve metal alone, and a porous body where a portion of the structure is an oxide of a valve metal. In the latter, an oxide of a valve metal is preferably present on a surface of the porous body.

A porous body is a material where pores are present, preferably having many pores with a diameter of approximately 1 nm to 10 $\mu$m on a surface thereof.

The shape of the porous body is not particularly limited; however, it is, for example, a molded body or a film (foil) having a certain thickness.

Examples of the porous body include a molded body consisting of a metal oxide alone (for example, a spherical body composed of an aluminium oxide having pores (alumina ball)). Moreover, examples thereof include a film (foil) composed of a metal oxide (for example, a film (foil) composed of aluminium having etching holes by surface roughening and an aluminium oxide formed on a surface thereof (an anode material of an aluminium electrolytic capacitor)), and a film composed of a sintered compact prepared from tantalum fine particles and tantalum pentaoxide formed on a surface of the sintered compact (an anode material of a tantalum capacitor).

The conductive polymer composition used in the step (A) includes (a) a conductive polymer and (b) a solvent. Each component contained in the conductive polymer composition is mentioned below.

The immersion method of the porous body including the oxide of the valve metal in the conductive polymer composition is not particularly limited. The entire porous body may be immersed in the conductive polymer composition by a one-time application operation, or the porous body may be immersed in the conductive polymer composition in stages or continuously.

The expression "immersed in stages" means that the porous body is moved multiple times separately to immerse it in the conductive polymer composition in stages. In other words, the expression "immersed in stages" means that the immersion operation is performed in stages. A serial immersion operation is performed in stages, and thereafter the porous body is taken out from the conductive polymer composition in the step (B). An example of the operation "it is immersed in stages" by a one-time application operation is such that the porous body is retained in a state of having been immersed in the conductive polymer composition from the lower edge of the porous body up to a predetermined distance, and subsequently retained in a state of having been immersed up to the next predetermined distance; the above are repeated until the porous body is ultimately immersed up to the upper edge thereof.

The expression "immersed continuously" means that the porous body is continuously moved at a predetermined speed to gradually immerse it in the conductive polymer composition. An example of the operation "it is immersed continuously" by a one-time application operation is such that the porous body is immersed in the conductive polymer composition from the lower edge thereof up to a predetermined distance at a constant speed, to thereby immerse the porous body up to the upper edge thereof.

When the porous body is immersed in the conductive polymer composition in stages or continuously, the conductive polymer can be smoothly impregnated inside the pores of the porous body.

When the porous body is immersed in stages, a first immersion is preferably performed in immersion direction D from the lower edge e of the porous body (refer to Fig. 1(b)) up to a height position of 10 to 70%, more preferably 15 to 50%, of height h of the porous body (refer to Fig. 1(b)).

When the porous body is immersed in stages, a second immersion is preferably performed in immersion direction

D from the lower edge e of the porous body (refer to Fig. 1(b)) up to a height position of 20 to 90%, more preferably 30 to 80%, of height h of the porous body (refer to Fig. 1(b)).

When the entire porous body is immersed in the conductive polymer composition by a one-time application operation, the time for retaining the porous body in the conductive polymer composition (hereinunder simply referred to as 'immersion time') is ordinarily 1 to 30 minutes, and preferably 1 to 10 minutes.

When the porous body is moved multiple times separately to immerse the porous body in a conductive polymer composition in stages, first, a site of the porous body, from a lower edge up to a predetermined height, is immersed in the conductive polymer composition and the immersion state is retained for, for example, 1 to 30 minutes, and preferably 1 to 10 minutes.

Next, the porous body is moved, and a part of a non-immersed portion is further immersed in the conductive polymer composition, and the immersion state is retained for, for example, 1 to 20 minutes, and preferably 1 to 10 minutes.

When the entire porous body is immersed in the conductive polymer composition by a one-time application operation, for example, each immersion time of the first immersion (step (A) described below), the second immersion (first step (C) described below), and a third immersion (second step (C)) may be the same, it may be sequentially increased, or it may be sequentially decreased.

When the porous body is immersed in the conductive polymer composition in stages by a one-time application operation (step (A) or step (C)), the immersion time of immersing and retaining the porous body at each stage may be the same at each step, or it may be sequentially increased or decreased; however, from the viewpoint of production efficiency, the immersion time is preferably decreased sequentially. When the operation is repeated, the entire porous body is ultimately immersed in the conductive polymer composition.

Moreover, when the porous body is immersed in the conductive polymer composition in stages, the total time of the immersion time in each immersion stage for each one-time application operation (step (A) or each step (C)), that is, the immersion time in a one-time application operation may be sequentially increased or decreased.

The temperature of the conductive polymer composition in which the porous body is immersed is not particularly limited; however, it is normally room temperature.

(Step (B))

Next, the porous body is taken out from the conductive polymer composition used in the immediately preceding immersion step, and it is retained for a predetermined retention time at a temperature which is lower than or equal to the boiling point of the solvent included in the conductive polymer composition used in the immediately preceding immersion step (retention step).

Thereby, a liquid film formed at the pore openings of the porous body disappears, and the liquid seal state is eliminated.

For example, when the step (B) is performed immediately after the step (A), the "conductive polymer composition used in the immediately preceding immersion step" refers to the conductive polymer composition used in the step (A) which is performed immediately preceding the step (B). Moreover, for example, when the step (B) is performed immediately after the step (C), the "conductive polymer composition used in the immediately preceding immersion step" refers to the conductive polymer composition used in the step (C) which is performed immediately preceding the step (B).

In the explanation of the step (B) below, the "conductive polymer composition used in the immediately preceding immersion step" may be simply referred to by "conductive polymer composition".

A space in which a porous body taken out from a conductive polymer composition is exposed, namely a "space outside a conductive polymer composition" is preferably in the air due to convenience.

The porous body having been taken out from the conductive polymer composition may be retained at a temperature which is lower than or equal to the boiling point of the solvent contained in the conductive polymer composition used in the immediately preceding immersion step, and, for example, it may be retained in the air, or it may be retained under a circulation atmosphere of a predetermined gas such as an argon gas and a nitrogen gas.

The temperature of the space in which the porous body having been taken out from the conductive polymer composition is retained is not particularly limited as long as it is lower than or equal to the boiling point of the solvent contained in the conductive polymer composition used in the immediately preceding immersion step; however, from the viewpoint of smoothly eliminating the liquid seal state of a porous body, it is preferably lower by 10°C or more, preferably lower by 15°C or more, or more preferably lower by 20°C or more, than the boiling point of the solvent contained in the conductive polymer composition used in the immediately preceding immersion step.

The temperature of the space in which the porous body having been taken out from the conductive polymer composition is retained may be, for example, 0 to 40°C, or it may be 10 to 30°C.

When it is within the above temperature range, solidification of a liquid film formed at the pore openings of the porous body is easily suppressed.

The pressure of the space in which the porous body having been taken out from the conductive polymer

composition is retained is not particularly limited; however, it is normally under atmospheric pressure, and for example, it may be 1 to 760 mmHg, or it may be 300 to 760 mmHg.

When it is within the aforementioned pressure range, a liquid seal state formed at the porous body can be smoothly eliminated.

The retention time in which a porous body having been taken out from the conductive polymer composition is retained is not particularly limited; however, it may be 1 second or more, 5 seconds or more, or 10 seconds or more, and it may be less than 10 minutes, 7 minutes or less, 5 minutes or less, or 3 minutes or less. From the viewpoint of production efficiency, and from the viewpoint of suppressing the volatility of solvent from a liquid film, a suitable retention time is 1 minute or less, or 30 seconds or less.

(Step (C))

Then, the part or all of the porous body which has been subjected to the retention step (B) is immersed in the conductive polymer composition which is the same as the conductive polymer composition used in the immediately preceding immersion step, or a conductive polymer composition including a different conductive polymer and solvent (immersion step).

Thereby, the conductive polymer composition can be impregnated to the depths of the porous body in which a liquid seal state is eliminated, and a state is in which the conductive polymer composition is highly filled in the pores of the porous body is achieved.

The conductive polymer composition in which the porous body is immersed in the step (C) may be the same as the conductive polymer composition used in the step (A), or it may be different from the conductive polymer composition used in the step (A). Moreover, when repeating the step (B) and the step (C) as described below, the conductive polymer composition in which the porous body is immersed in the immediately preceding the step (C) may be the same as, or different from, the conductive polymer composition used in the previous the step (C).

Here, the "conductive polymer composition being different" refers to the case where the respective types of conductive polymer and solvent contained in the conductive polymer composition differ, as well as the case where the respective compounding amounts differ (namely, the case where the concentration of the conductive polymer differs).

In the immersion of the porous body into the conductive polymer composition, the entire porous body may be immersed in the conductive polymer composition by a one-time application operation as with the step (A).

Moreover, the porous body may be immersed in the conductive polymer composition in stages or continuously, for example, similarly to that explained in the step (A).

A suitable range of immersion times in each of the cases and a suitable range of the temperatures of the conductive polymer composition in which a porous body is immersed are the same as those explained in the step (A).

Moreover, when the porous body is immersed in stages, a suitable range of heights h of immersion direction D of the porous body of each stage is the same as those explained in the step (A).

The above-mentioned immersion method of the porous body into the conductive polymer composition in the step (A) and immersion method of the porous body into the conductive polymer composition in the step (C) may be the same as or different from each other.

For example, when the porous body is immersed in stages in the conductive polymer composition in the step (A), by a one-time application operation in the step (C), the entire porous body may be immersed in the conductive polymer composition, the porous body may be continuously immersed in the conductive polymer composition, or the porous body may be immersed in stages in the conductive polymer composition.

After the step (C) is performed, the cycle of the step (B) and the step (C) may further be performed repeatedly multiple times. For example, the cycle of the step (B) and the step (C) may be repeated for a total of 2 to 10 times.

When the cycle of the step (B) and the step (C) is repeatedly performed multiple times, the conductive polymer composition in which the porous body is immersed in each step (C) may be the same as the conductive polymer composition used in the immediately preceding the step (C), or it may be different from the conductive polymer composition used in the immediately preceding the step (C).

(Step (D))

A step (D) is an optional step, and it is a drying step in which the solvent included in the conductive polymer composition is volatilized from the porous body after the step (C) is performed to promote fixing of the conductive polymer into the porous body. Here, unlike in the step (B), the "drying" refers to a solvent volatilizing treatment which is performed at a temperature higher than the boiling point of the solvent in the conductive polymer composition.

Here, when a plurality of solvents is included in the conductive polymer composition, the "temperature higher than the boiling point of the solvent in the conductive polymer composition" refers to the boiling point of the solvent having the highest boiling point among these solvents.

The drying temperature of the porous body including the conductive polymer composition is the temperature higher than the boiling point of the solvent in the conductive polymer composition, and it should be appropriately determined depending on the type of solvent used; however, it is normally 30 to 200°C, and preferably 100 to 180°C. The drying time is normally 10 to 120 minutes, and preferably 30 to 90 minutes.

When the drying of the porous body is performed in the step (D), the conductive polymer-containing porous body in which a solid electrolytic layer composed of the conductive polymer is more firmly fixed inside the pores of, and on the surface of, the porous body can be obtained.

The conductive polymer-containing porous body is the porous body including the conductive polymer, and it is specifically a porous body and the like which includes the solid electrolyte (solid electrolytic layer) composed of the conductive polymer inside the pores of, and on the surface of the porous body.

Examples of the conductive polymer-containing porous bodies include a spherical body of aluminium oxide (alumina ball) which contains the solid electrolyte composed of the conductive polymer, an anode material of an aluminium electrolytic capacitor in which the solid electrolyte (solid electrolytic layer) composed of the conductive polymer is formed, and an anode material of a tantalum capacitor (an anode body composed of a valve metal and an oxide thereof).

Each component included in the conductive polymer composition used in the present aspect will be explained in detail.

(a) Conductive polymer

Examples of the conductive polymer (component (a)) include polyaniline, polythiophene, polypyrrole, and derivatives thereof. These may have a substituent, or may not have a substituent. These may be used alone, or two or more thereof may be used in combination.

Polyaniline is preferable as the conductive polymer.

From the viewpoint of obtaining good conductivity in a complex, the polyaniline preferably has a weight average molecular weight of 10,000 or more, more preferably 20,000 or more, still more preferably 30,000 or more and 1,000,000 or less, still more preferably 40,000 or more and 1,000,000 or less, and most preferably 52,000 or more and 1,000,000 or less.

When the conductive polymer is used, for example, in the solid electrolytic layer of the solid electrolytic capacitor, from the viewpoint of being capable of increasing the strength of the obtainable electrolytic layer, the molecular weight of the conductive polymer is generally preferably as large as possible. On the other hand, since the viscosity increases with a large molecular weight, it may become difficult to impregnate the inside of the pores of the porous body.

The molecular weight of polyaniline is measured by the method described in the examples.

The polyaniline is preferably an unsubstituted polyaniline from the viewpoint of versatility and economy.

Examples of the substituent in the case where it has the substituent include a linear or branched hydrocarbon group such as a methyl group, ethyl group, hexyl group, octyl group; alkoxy group such as a methoxy group, and ethoxy group; aryloxy group such as a phenoxy group; and halogenated hydrocarbon such as a trifluoro methyl group ($-CF_3$ group).

In one embodiment of the present invention, the conductive polymer is preferably a polyaniline complex in which a proton donor is doped to the polyaniline. When the polyaniline complex is used, the solubility in solvent is improved.

It can be confirmed that a proton donor is doped in a polyaniline, by ultraviolet, visible light, or near infrared spectroscopy, or by X-ray photoelectron spectroscopy.

The proton donor can be used without any particular limitation as long as it has sufficient acidity for generating a carrier in the polyaniline.

Examples of the proton donor include a Bronsted acid or a salt thereof. It is preferably an organic acid or a salt thereof, and more preferably a proton donor represented by the following formula (I).

$$M(XARn)m \qquad (I)$$

M in the formula (I) is a hydrogen atom, an organic free radical or an inorganic free radical.

Examples of the aforementioned organic free radical include a pyridinium group, an imidazolium group, and an anilinium group. Moreover, examples of the above inorganic free radical include lithium, sodium, potassium, cesium, ammonium, calcium, magnesium and iron.

X in the formula (I) is an anionic group. Examples of thereof include $-SO_3^-$ group, $-PO_3^{2-}$ group, $-PO_4(OH)^-$ group, $-OPO_3^{2-}$ group, $-OPO_2(OH)^-$ group and $-COO^-$ group, and it is preferably $-SO_3^-$ group.

A of the formula (I) is a substituted or unsubstituted hydrocarbon group (having, for example, 1 to 20 carbon atoms).

The hydrocarbon group is a chain or cyclic saturated aliphatic hydrocarbon group, a chain or cyclic unsaturated aliphatic hydrocarbon group, or an aromatic hydrocarbon group.

Examples of the chain saturated aliphatic hydrocarbon group include a linear or branched alkyl group (having, for

example, 1 to 20 carbon atoms). Examples of the cyclic saturated aliphatic hydrocarbon group include a cycloalkyl group (having, for example, 3 to 20 carbon atoms) such as a cyclopentyl group, a cyclohexyl group, a cycloheptyl group and a cyclooctyl group. In the cyclic saturated aliphatic hydrocarbon group, a plurality of cyclic saturated aliphatic hydrocarbon groups may be condensed. Examples thereof include a norbornyl group, an adamantyl group, a condensed adamantyl group, and the like. Examples of the chain unsaturated aliphatic hydrocarbon (having, for example, 2 to 20 carbon atoms) include a linear or branched alkenyl group. Examples of the cyclic unsaturated aliphatic hydrocarbon group (having, for example, 3 to 20 carbon atoms) include a cyclic alkenyl group. Examples of the aromatic hydrocarbon group (having, for example, 6 to 20 carbon atoms) include a phenyl group, a naphthyl group, an anthracenyl group, and the like.

The substituent in the case where A is a substituted hydrocarbon group is an alkyl group (having for example1 to 20 carbon atoms), a cycloalkyl group (having, for example, 3 to 20 carbon atoms), a vinyl group, an allyl group, an aryl group (having, for example, 6 to 20 carbon atoms), an alkoxy group (having, for example, 1 to 20 carbon atoms), a halogen atom, a hydroxy group, an amino group, an imino group, a nitro group, a silyl group, or an ester bond containing group.

R of the formula (I) is bonded with A, and is a substituent represented by -H, $-R^1$, $-OR^1$, $-COR^1$, $-COOR^1$, $-(C{=}O)-(COR^1)$, or $-(C{=}O)-(COOR^1)$. $R^1$ is a hydrocarbon group which may contain a substituent, a silyl group, an alkyl silyl group, $-(R^2O)\,x-R^3$ group or $-(OSiR^3{}_2)\,x-OR^3$ group. $R^2$ is an alkylene group, $R^3$ is a hydrocarbon group, and x is an integer of 1 or more. When x is 2 or more, a plurality of $R^{2}$'s may be independently the same as or different from each other, and a plurality of $R^{3}$'s may be independently the same as or different from each other.

Examples of the hydrocarbon group (having, for example, 1 to 20 carbon atoms) of $R^1$ include a methyl group, an ethyl group, a butyl group, a pentyl group, a hexyl group, a heptyl group, an octyl group, a nonyl group, a decyl group, a dodecyl group, a pentadecyl group, an eicosanyl group, and the like. The hydrocarbon group may be linear, or it may be branched.

The substituent of the hydrocarbon group is an alkyl group (having, for example, 1 to 20 carbon atoms), a cycloalkyl group (having, for example, 3 to 20 carbon atoms), a vinyl group, an allyl group, an aryl group (having, for example, 6 to 20 carbon atoms), an alkoxy group (having, for example, 1 to 20 carbon atoms), a halogen group, a hydroxy group, an amino group, an imino group, a nitro group, or an ester bond containing group. The hydrocarbon group of $R^3$ is the same as those of $R^1$.

Examples of the alkylene group (having, for example, 1 to 20 carbon atoms) of $R^2$ include a methylene group, an ethylene group, a propylene group, and the like.

n in the formula (I) is an integer of 1 or more. When n is 2 or more, a plurality of R's may be independently the same as or different from each other.

m of the formula (I) is the valence number of M / the valence number of X.

The compound represented by the formula (I) is preferably dialkyl benzene sulfonic acid, dialkyl naphthalene sulfonic acid, or a compound containing two or more ester bonds.

The aforementioned compound containing two or more ester bonds is more preferably a sulfophthalic acid ester, or a compound represented by the following formula (II).

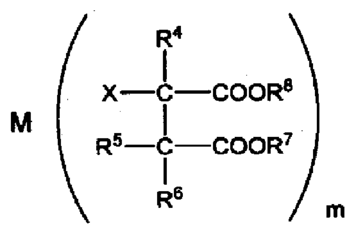

(II)

In the formula (II), M and X are the same as those in the formula (I). X is preferably $-SO_3^-$ group.

$R^4$, $R^5$ and $R^6$ are independently a hydrogen atom, a hydrocarbon group or an $R^9{}_3Si-$ group. Three $R^{9}$'s are independently a hydrocarbon group.

Examples of the hydrocarbon group in the case where $R^4$, $R^5$ and $R^6$ are a hydrocarbon group include a linear or branched alkyl group having 1 to 24 carbon atoms, an aryl group (having, for example, 6 to 20 carbon atoms) including an aromatic ring, an alkyl aryl group (having, for example, 7 to 20 carbon atoms), and the like.

The hydrocarbon group of $R^9$ is the same as those of $R^4$, $R^5$ and $R^6$.

$R^7$ and $R^8$ in the formula (II) are independently a hydrocarbon group or $-(R^{10}O)_q-R^{11}$ group. $R^{10}$ is a hydrocarbon group or a silylene group, $R^{11}$ is a hydrogen atom, a hydrocarbon group or $R^{12}{}_3Si-$, and q is an integer of 1 or more. Three $R^{12}$'s are independently a hydrocarbon group.

Examples of the hydrocarbon group in the case where $R^7$ and $R^8$ are a hydrocarbon group include a linear or branched alkyl group having 1 to 24 carbon atoms and preferably 4 or more carbon atoms, an aryl group (having, for example, 6 to 20 carbon atoms) including an aromatic ring, an alkyl aryl group (having, for example, 7 to 20 carbon atoms). Specific examples thereof include a butyl group, a pentyl group, a hexyl group, an octyl group, a decyl group and the like, all

of which are linear or branched.

The hydrocarbon group in the case where $R^{10}$ is a hydrocarbon group in $R^7$ and $R^8$ is, for example, a linear or branched alkylene group having 1 to 24 carbon atoms, an arylene group (having, for example, 6 to 20 carbon atoms) including an aromatic ring, an alkyl arylene group (having, for example, 7 to 20 carbon atoms), or an aryl alkylene group (having, for example, 7 to 20 carbon atoms). Moreover, the hydrocarbon group in the case where $R^{11}$ and $R^{12}$ are the hydrocarbon group in $R^7$ and $R^8$ is the same as those of $R^4$, $R^5$ and $R^6$, and q is preferably 1 to 10.

Specific examples of the compound represented by the formula (II) in the case where $R^7$ and $R^8$ are $-(R^{10}O)_q-R^{11}$ group include two compounds represented by the following formulas:

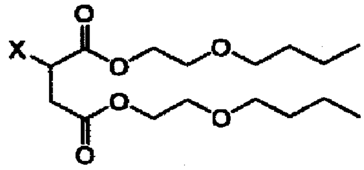

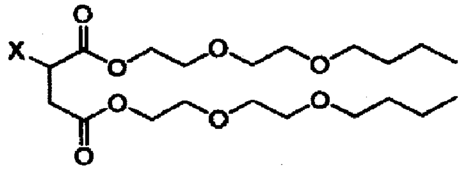

wherein in the formulas, X is the same as defined in the formula (I).

The compound represented by the aforementioned formula (II) is still more preferably a sulfosuccinic acid derivative represented by the following formula (III).

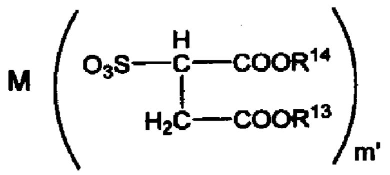

(III)

In the formula (III), M is the same as those in the formula (I). m' is a valence number of M.

$R^{13}$ and $R^{14}$ are independently a hydrocarbon group or $-(R^{15}O)_r-R^{16}$ group. $R^{15}$ is a hydrocarbon group or a silylene group, $R^{16}$ is a hydrogen atom, a hydrocarbon group or an $R^{17}{}_3Si$-group, and r is an integer of 1 or more. Three $R^{17}$'s are independently a hydrocarbon group. When r is two or more, a plurality of $R^{15}$'s may be independently the same as or different from each other.

The hydrocarbon group in the case where $R^{13}$ and $R^{14}$ are a hydrocarbon group is the same as those of $R^7$ and $R^8$.

The hydrocarbon group in the case where $R^{15}$ is a hydrocarbon group in $R^{13}$ and $R^{14}$ is the same as those of the aforementioned $R^{10}$. Moreover, the hydrocarbon group in the case where $R^{16}$ and $R^{17}$ are a hydrocarbon group in $R^{13}$ and $R^{14}$ is the same as those of the aforementioned $R^4$, $R^5$ and $R^6$.

r is preferably 1 to 10.

Specific examples in the where $R^{13}$ and $R^{14}$ are $-(R^{15}O)_r-R^{16}$ group are the same as those of - $(R^{10}O)_q-R^{11}$ in $R^7$ and $R^8$.

The hydrocarbon group of $R^{13}$ and $R^{14}$ is the same as those of $R^7$ and $R^8$, and it is preferably a butyl group, a hexyl group, a 2-ethylhexyl group, or a decyl group.

As the compound represented by the formula (I), di(2-ethylhexyl) sulfosuccinic acid and sodium di(2-ethylhexyl) sulfosuccinate are preferable.

It is known that the conductivity of a polyaniline complex or the solubility into a solvent can be controlled by changing the structure of the aforementioned proton donor (JP 3384566 B2). In the present embodiment, an optimal proton donor can be selected by the properties required for each application.

The doping ratio of the proton donor to polyaniline is preferably 0.30 or more and 0.65 or less, more preferably 0.32 or more and 0.60 or less, still more preferably 0.33 or more and 0.57 or less, and most preferably 0.34 or more and 0.55 or less. Normally, when the doping ratio is 0.30 or more, the solubility of the polyaniline complex in an organic solvent is sufficient.

The doping ratio is defined by (the number of moles of a proton donor doped in polyaniline) / (the number of moles

of a monomer unit of polyaniline). For example, the doping ratio of a polyaniline complex containing an unsubstituted polyaniline and a proton donor being 0.5 means that one proton donor dopes to two monomer unit molecules of polyaniline.

The doping ratio can be calculated when the number of moles of the proton donor and the number of moles of the monomer units of polyaniline in the polyaniline complex can be measured. For example, when the proton donor is an organic sulfonic acid, the doping ratio can be calculated by quantifying the number of moles of sulfur atoms derived from the proton donor and the number of moles of nitrogen atoms derived from the monomer units of the polyaniline by an organic elemental analytical method and by taking the ratio of the values thereof.

A polyaniline complex preferably includes an unsubstituted polyaniline, and a sulfonic acid which is a proton donor and satisfies the following formula (1):

$$0.32 \leq S_5 / N_5 \leq 0.60 \quad (1)$$

wherein in the formula, $S_5$ is the total number of moles of sulfur atoms contained in the polyaniline complex, and $N_5$ is the total number of moles of nitrogen atoms contained in the polyaniline complex; and the number of moles of the aforementioned nitrogen atoms and sulfur atoms is a value measured, for example, by an organic elemental analytical method.

The method of producing a soluble conductive polymer according to the aforementioned embodiment is not particularly limited; however, it can be produced, for example, by the method for producing a soluble conductive polymer according to the embodiment as described below.

For example, the aforementioned proton donor, aniline corresponding to the aforementioned polyaniline, and if needed, a surfactant (for example, non-ionic emulsifier) are dissolved in a water-immiscible organic solvent (for example, a hydrocarbon-based solvent (preferably toluene, xylene)), where an aqueous acidic solution (for example, aqueous phosphoric acid solution) is added thereto, and a reaction liquid having two liquid phases of the water-immiscible organic solvent and water is stirred, a polymerisation initiator (for example, ammonium persulfate) is supplied to effectuate polymerization.

After the polymerisation, a polyaniline complex water-immiscible organic solvent solution can be obtained by separating the water-immiscible organic solvent phase by still standing. This solution is transferred to an evaporator, a volatile component is removed by evaporation and distillation to obtain a polyaniline complex (protonated polyaniline).

(b) Solvent

The solvent (component (b)) is not particularly limited as long as it dissolves or disperses a conductive polymer. The solvent (component (b)) is most preferably one which dissolves the conductive polymer. Provided that it does not include the components (c) to (e) mentioned below. The solvent is preferably an organic solvent. Examples thereof include an aromatic-based hydrocarbon, aliphatic hydrocarbon, alcohol, ketone, ether, and ester. These may be used alone, or two or more thereof may be used in combination.

The organic solvent may be a water-soluble organic solvent, or it may be an organic solvent (water immiscible organic solvent) which is not substantially miscible in water.

As the water-soluble organic solvent, a high polarity organic solvent can be used. It may be a protic polar solvent, or it may be an aprotic polar solvent. Examples thereof include alcohols such as methanol, ethanol, isopropyl alcohol, 1-propanol, 1-ethoxy-2-propanol, 2-ethoxy-1-propanol, 1-butanol, 2-butanol, 2-pentanol, benzyl alcohol and alkoxy alcohol (for example, 1-methoxy-2-propanol, 3-methoxy-1-butanol, 3-methoxy-3-methyl butanol); ketones such as acetone, methyl ethyl ketone, methyl isobutyl ketone; ethers such as tetrahydrofuran, 4-methyltetrahydropyran, dioxane, diethyl ether and ethylene glycol mono-tert-butyl ether; an aprotic polar solvent such as N methyl pyrrolidone; and the like.

A low polarity organic solvent can be used as the water immiscible organic solvent, and examples thereof include a hydrocarbon-based solvent such as hexane, benzene, toluene, xylene, ethyl benzene, tetralin; a halogen-containing-based solvent such as methylene chloride, chloroform, carbon tetrachloride, dichloroethane, tetrachloroethane; an ester-based solvent such as ethyl acetate, isobutyl acetate, n-butyl acetate, ethyl lactate, methyl lactate; ketone solvents such as methyl isobutyl ketone (MIBK), methyl ethyl ketone, cyclopentanone, cyclohexanone; ether solvents such as cyclopentyl methyl ether; and the like. Moreover, an isoparaffin-based solvent containing one kind or two or more kinds of isoparaffin may be used as a hydrocarbon-based solvent.

Moreover, 'KYOWASOL C900' (produced by KH Neochem Co., Ltd.) for example, may be used as the solvent.

Among these, toluene, xylene, methyl isobutyl ketone, chloroform, trichloroethane and ethyl acetate are preferable in terms of excellent solubility of the conductive polymer.

In the case of a polyaniline complex, it can be dissolved even when the solvent is an alcohol such as isopropyl alcohol, 1-butanol, 2-butanol, 2-pentanol, benzyl alcohol, and alkoxy alcohol. Alcohols are preferable compared with the aromatics such as toluene, from the viewpoint of environmental burden reduction.

When the organic solvent is used as the solvent, by using a mixed organic solvent in which a water immiscible

organic solvent and a water-soluble organic solvent are mixed in a mass ratio of 99 to 1 : 1 to 99, the occurrence of gelling and the like during storage can be prevented and long-term storage is possible, which is preferable.

The mixed organic solvent may include one kind or two or more kinds of water immiscible organic solvents, or it may include one kind or two or more kinds of water-soluble organic solvents.

The concentration of the component (a) based on the total amount of the solvent (component (b)) [component (a) / (component (a) + component (b)) × 100 (%)] may be 0.01% by mass or more, it may be 0.03% by mass or more, it may be 0.05% by mass or more, or it may be 2.0% by mass or more. Moreover, it is normally 15.0% by mass or less, may be 13.0% by mass or less, it may be 12.0% by mass or less, it may be 10.0% by mass or less, it may be 9.0% by mass or less, or it may be 8.0% by mass or less.

When the conductive polymer composition further includes one or more of the components (c) to (e) mentioned below, the concentration of the component (a) is normally 0.3 to 20% by mass, preferably 0.5 to 20% by mass, more preferably 1 to 15% by mass, still more preferably 1 to 10% by mass, and still more preferably 1 to 7% by mass, based on the total amount of the conductive polymer composition.

The amount of the component (b) can be appropriately adjusted depending on the amounts of the other components, and therefore, it is not limited; however, it may be 200 to 20,000 parts by mass, 300 to 1,7000 parts by mass, 500 to 12,000 parts by mass, 500 to 5,000 parts by mass, or 500 to 1,500 parts by mass, based on 100 parts by mass of the component (a).

(c) Acid or salt

In one embodiment of the present aspect, the conductive polymer composition may or may not further include an acid or a salt (component (c)).

Moreover, the component (c) may be mixed with the component (b), and they may be used as a mixed solvent. In this case, the concentration of the component (a) based on the solvent is calculated based on the mass of a combination of the component (b) with the component (c).

The acid or salt is not particularly limited. Provided that the component (c) does not include the below-mentioned components (d) and (e). The acid is an Arrhenius acid or Bronsted acid having an acidic group ($H^+$). Examples thereof include a sulfonic acid and salts thereof, phosphoric acid and salts thereof, phosphoric acid ester and salts thereof, carboxylic acid and salts thereof, amino acid and salts thereof, boric acid and salts thereof, boronic acid and salts thereof, and the like.

As the salt, an ammonium salt or an alkali metal salt (such as a sodium salt, a lithium salt or a potassium salt) of a corresponding acid can be used, for example.

Specific examples thereof include phosphoric acid and salts thereof; monomethyl phosphate, dimethyl phosphate, a mixture of monomethyl phosphate and dimethyl phosphate, and salts thereof; monoethyl phosphate, diethyl phosphate, a mixture of monoethyl phosphate and diethyl phosphate, and salts thereof; monoisopropyl phosphate, diisopropyl phosphate, a mixture of monoisopropyl phosphate and diisopropyl phosphate, and salts thereof; monobutyl phosphate, dibutyl phosphate, a mixture of monobutyl phosphate and dibutyl phosphate, and salts thereof; mono(2-ethylhexyl) phosphate, di(2-ethylhexyl) phosphate, a mixture of mono(2-ethylhexyl) phosphate and di(2-ethylhexyl) phosphate, and salts thereof; acetic acid and salts thereof; propionic acid and salts thereof; butyric acid and salts thereof; DL-2-methyl butyric acid and salts thereof; 2-ethylhexanoic acid and salts thereof; 3,5,5-trimethylhexanoic acid and salts thereof; myristic acid and salts thereof; 2-methyl valeric acid and salts thereof; adipic acid and salts thereof; glycine and salts thereof; β alanine and salts thereof; DL-alanine and salts thereof; DL-valine and salts thereof; (±)-10-camphor sulfonic acid and salts thereof; dioctyl sulfosuccinate and salts thereof; 2-[4-(2-hydroxy ethyl)-1-piperazinyl] ethanesulfonate and salts thereof; boric acids and borates; dodecyl benzene sulfonic acids and dodecyl benzene sulfonates; phenylboronic acids and phenylboronates; and the like.

These may be used alone, or two or more thereof may be used in combination.

Among them, a phosphoric acid ester and salts thereof, a carboxylic acid and salts thereof, a carboxylic acid ester and salts thereof, an amino acid and salts thereof, and the like may be used. It may be configured to use an acid different from a heat-resistant stabilizer.

The component (c) preferably has a solubility parameter (SP value) of 13.0 $(cal/cm^3)^{1/2}$ or less, and more preferably 11.0 $(cal/cm^3)^{1/2}$ or less. Moreover, it may be 10.0 $(cal/cm^3)^{1/2}$ or less. The SP value thereof is normally 0 $(cal/cm^3)^{1/2}$ or more.

The SP value thereof is calculated by the Fedors method described in "Polymer Engineering & Science", 1974, Vol. 14, pages 147 to 154.

The component (c) is preferably an acid having a hydrophobic group.

Examples of the hydrophobic group include a linear alkyl group, a branched alkyl group, an alkyl phenyl group, an alkyl naphthyl group, and the like. The alkyl group of the linear alkyl group and the branched alkyl group, and the alkyl group contained in the alkyl phenyl group and the alkyl naphthyl group have preferably 2 to 20 carbon atoms.

Examples of the component (c) include alkyl carboxylic acid, phosphoric acid monoester, phosphoric acid diester, alkyl benzene carboxylic acid, alkyl benzene phosphonic acid, and the like. The alkyl benzene carboxylic acid is a compound represented by R-Ph-COOH, and the alkyl benzene phosphonic acid is a compound represented by R-Ph-$PO(OH)_2$ (wherein in the formulas, R is an alkyl group, and Ph is a phenyl group).

The alkyl group of the alkyl carboxylic acid, the alkyl benzene carboxylic acid and the alkyl benzene phosphonic acid has preferably 2 to 20 carbon atoms. The phosphoric acid monoester and the phosphoric acid diester are preferably ester obtainable from a phosphoric acid and an alcohol having 2 to 20 carbon atoms.

Specific examples of the component (c) include propionic acid, DL-2-methyl butyric acid, 2-methyl valeric acid, 2-ethylhexanoic acid, 3,5,5-trimethyl hexanoic acid, myristic acid, monomethyl phosphate, dimethyl phosphate, a mixture of monomethyl phosphate and dimethyl phosphate, monoethyl phosphate, diethyl phosphate, a mixture of monoethyl phosphate and diethyl phosphate, monoisopropyl phosphate, diisopropyl phosphate, a mixture of monoisopropyl phosphate and diisopropyl phosphate, monobutyl phosphate, dibutyl phosphate, a mixture of monobutyl phosphate and dibutyl phosphate, mono(2-ethylhexyl) phosphate, di(2-ethylhexyl) phosphate, a mixture of mono(2-ethylhexyl) phosphate and di(2-ethylhexyl) phosphate, and the like.

The amount of the component (c) is preferably 0.1 to 70% by mass, more preferably 0.5 to 70% by mass, still more preferably 1 to 30% by mass, and still more preferably 2 to 20% by mass, in the conductive polymer composition.

The amount of the component (c) may be, for example, 20 to 200 parts by mass or, 25 to 150 parts by mass based on 100 parts by mass of the component (a). It may be 200 to 900 parts by mass, or 400 to 800 parts by mass, based on 100 parts by mass of the component (a). Moreover, it may be more than 1,000 parts by mass based on 100 parts by mass of the component (a), and for example, it may be 1,100 to 7,000 parts by mass, or 1,200 to 3,000 parts by mass.

In one embodiment, the conductive polymer composition may further include any one or both of (d) a heat-resistant stabilizer and (e) a phenolic compound.

(d) Heat-resistant stabilizer

Examples of the heat-resistant stabilizer (component (d)) include an acidic substance or a salt of an acidic substance. However, the component (d) does not contain the components (c) and (e). The acidic substance may be any of an organic acid (acid of an organic compound) containing one or more sulfonic acid groups, and an inorganic acid (acid of an inorganic compound).

The acidic substance may be any of an organic acid which is an acid of an organic compound or an inorganic acid which is an acid of an inorganic compound, but is preferably an organic acid.

The acidic substance is preferably an organic acid containing one or more sulfonic acid groups.

The organic acid having the aforementioned sulfonic acid group is preferably a cyclic, chain or branched alkyl sulfonic acid, substituted or unsubstituted aromatic sulfonic acid, or polysulfonic acid with one or more sulfonic acid groups.

Examples of the aforementioned alkyl sulfonic acid include methane sulfonic acid, ethane sulfonic acid, and di(2-ethylhexyl) sulfosuccinic acid. Here, the alkyl group is preferably a linear or branched alkyl group having 1 to 18 carbon atoms.

Examples of the aforementioned aromatic sulfonic acid include those having 6 to 20 carbon atoms, and examples thereof include a sulfonic acid having a benzene ring, a sulfonic acid having a naphthalene skeleton, and a sulfonic acid having an anthracene skeleton. Moreover, examples of the aforementioned aromatic sulfonic acid include substituted or unsubstituted benzene sulfonic acid, substituted or unsubstituted naphthalene sulfonic acid, and substituted or unsubstituted anthracene sulfonic acid.

The substituent is, for example, a substituent selected from the group consisting of an alkyl group (for example, having 1 to 20 carbon atoms), alkoxy group (for example, having 1 to 20 carbon atoms), hydroxy group, nitro group, carboxy group, acyl group, and one or more thereof may substitute.

Specific examples of the aromatic sulfonic acid include a compound represented by the following formula (4) or (5):

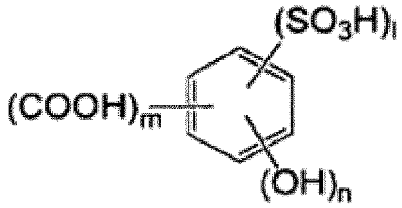

(4)

wherein in the formula (4), l is 1 or more, m is an integer of 0 or more and 5 or less, n is an integer of 0 or more and 5 or less;

when one of m or n is 0, the other is 1 or more:

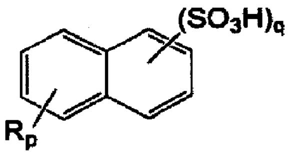

(5)

wherein in the formula (5), q is 1 or more, p is an integer of 0 or more and 7 or less, and R is independently an alkyl group having 1 to 20 carbon atoms, carboxy group, hydroxide group, nitro group, cyano group, or amino group.

l is preferably 1 to 3. m is preferably 1 to 3. n is preferably 0 to 3.

q is preferably 1 to 3. p is preferably 0 to 3. R is preferably an alkyl group having 1 to 20 carbon atoms, a carboxy group or a hydroxide group.

Examples of the aromatic sulfonic acid include 4-sulfophthalic acid, 5-sulfoisophthalic acid, 5-sulfosalicylic acid, 1-naphthalene sulfonic acid, 2-naphthalene sulfonic acid, 2-hydroxy-6-naphthalene sulfonic acid, p-phenol sulfonic acid, toluene sulfonic acid, p-xylene-2-sulfonic acid, 4,4'-biphenyl disulfonic acid, dibenzofuran-2-sulfonic acid, flavianic acid, (+)-10-camphor sulfonic acid, mono isopropyl naphthalene sulfonic acid, 1-pyrene sulfonic acid, and the like. 4-sulfophthalic acid, 5-sulfosalicylic acid, 5-sulfoisophthalic acid, 2-naphthalene sulfonic acid, dibenzofuran-2-sulfonic acid, flavianic acid, 2-hydroxy-6-naphthalene sulfonic acid and 1-pyrene sulfonic acid are preferable among these from the viewpoint of heat resistance improvement.

Examples of the salt of the acidic substance include a salt of a compound mentioned above. Examples of the counter-ion of salt include sodium, lithium, potassium, cesium, ammonium, calcium, barium, and the like.

The component (d) may be a hydrate.

The amount of the component (d) is preferably 0.1 to 1,000 parts by mass, more preferably 1 to 100 parts by mass, still more preferably 1 to 30 parts by mass, and still more preferably 2 to 8 parts by mass, based on 100 parts by mass of the component (a).

(e) Phenolic compound

The phenolic compound (component (e)) is not particularly limited, and it is a compound represented by ArOH (wherein Ar is an aryl group or a substituted aryl group). The component (e) is a component which differs from the components (b) to (d).

Specific examples include substituted phenols such as phenol, o-, m- or p-cresol, o-, m- or p-ethyl phenol, o-, m- or p-propyl phenol, o-, m- or p-butyl phenol, o-, m- or p-chlorophenol, salicylic acid, hydroxy benzoic acid and hydroxy naphthalene; polyvalent phenolic compounds such as catechol and resorcinol; polymer compounds such as phenol resin, polyphenol and poly(hydroxy styrene); and the like.

Moreover, a phenolic compound represented by the following formula (6) may be used:

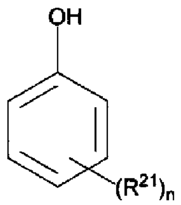

(6)

wherein n is an integer of 1 to 5; when n is 2 or more, a plurality of $R^{21}$'s may be the same as or different from each other; and $R^{21}$ is independently an alkyl group having 2 to 10 carbon atoms, an alkenyl group having 2 to 20 carbon atoms, an alkylthio group having 1 to 20 carbon atoms, a cycloalkyl group having 3 to 10 carbon atoms, an aryl group having 6 to 20 carbon atoms, an alkyl aryl group having 7 to 20 carbon atoms, or an aryl alkyl group having 7 to 20 carbon atoms.

Examples of the alkyl group of the aforementioned $R^{21}$ include methyl, ethyl, propyl, isopropyl, butyl, isobutyl, tertiary butyl, tertiary amyl, and the like.

Examples of the alkenyl group include a substituent having an unsaturated bond in the molecule of the aforementioned alkyl group.

Examples of the cycloalkyl group include cyclopentane and cyclohexane.

Examples of the alkylthio group include methylthio and ethylthio.

Examples of the aryl group include phenyl and naphthyl.

Examples of the alkyl aryl group and aryl alkyl group include substituents obtainable by combining the

aforementioned alkyl groups and aryl groups, and the like.

$R^{21}$ is preferably a methyl group or an ethyl group among these groups.

The amount of the component (e) is preferably 10 to 5,000 parts by mass, more preferably 10 to 2,000 parts by mass, and still more preferably 10 to 1,000 parts by mass, based on 100 parts by mass of the component (a).

Moreover, the amount of the component (e) may be 100 to 10,000 parts by mass, based on 100 parts by mass of the component (a).

When the phenolic compound is used, it is preferable since the conductivity thereof is improved and the solubility thereof into an alcohol is improved.

The amount of the component (e) is 1 to 80% by mass, more preferably 5 to 60% by mass, and still more preferably 10 to 40% by mass in the conductive polymer composition. When the phenolic compound is used, it is preferable since the conductivity thereof is improved and the solubility thereof into an alcohol is improved.

Moreover, the component (e) may be mixed with the component (b) to be used as a mixed solvent. In this case, the concentration of the component (a) based on the solvent is calculated based on the mass of a combination of the component (e) with the component (b).

The conductive polymer composition may essentially consist of the components (a) and (b), and optionally one or more components selected from the group consisting of the components (c), (d) and (e). In this case, an unavoidable impurity may be contained. For example, 70% by mass or more, 80% by mass or more, 90% by mass or more, 98% by mass or more, 99% by mass or more, 99.5% by mass or more of the conductive polymer composition may be the components (a) and (b), and optionally one or more components selected from the group consisting of the components (c), (d) and (e). Moreover, the conductive polymer composition may consist of only the components (a) and (b), and optionally one or more components selected from the group consisting of the components (c), (d) and (e).

In the conductive polymer-containing porous body obtainable by the aforementioned production method of the present aspect, a layer composed of a conductive polymer is formed inside the pores of the porous body having roughness on the surface, and on the surface of the porous body.

[Conductive polymer-containing porous body]

The conductive polymer-containing porous body of the present aspect is obtainable by the aforementioned method for producing the conductive polymer-containing porous body of the present aspect. The porous body and conductive polymer are as in the aforementioned.

The conductive polymer-containing porous body on which a solid electrolytic layer is formed may be immersed in a solution containing the aforementioned component (d). In this case, the component (d) is preferably the sulfonic acid represented by the aforementioned formula (4) or the salt thereof.

The solution containing the component (d) for immersion may contain a solvent.

The solvent is not particularly limited as long as the component (d) is dissolved; however, examples thereof include water, an alcohol-based solvent, ketone-based solvent, ether-based solvent, ester-based solvent, and the like. It may used alone, or two or more thereof may mixed and used.

Specific examples of the solvent include methanol, ethanol, isopropyl alcohol, n-butanol, 1-methoxy-2-propanol, 3-methoxy-1-butanol, 3-methoxy-3-methyl butanol, 1-ethoxy-2-propanol, ethyl acetate, butyl acetate, MIBK, methyl ethyl ketone (MEK), ethylene glycol mono-tert-butyl ether, propylene glycol mono methyl ether acetate, dipropylene glycol mono methyl ether, and the like.

Moreover, the amount of the component (d) is preferably 0.1% by mass to 10% by mass, more preferably 0.3% by mass to 6% by mass, and still more preferably 0.7% by mass to 3.5% by mass in the solution for immersion.

As the immersion method, dipping and the like can be given.

The immersion time is preferably 1 minute or more, and more preferably 3 minutes or more and 200 minutes or less. The immersion temperature is preferably 5°C to 50°C.

Drying after immersion is preferably performed by an oven, hot plate, and the like.

The drying temperature is preferably 80 to 200°C, and more preferably 100 to 170°C.

The drying time is preferably 1 to 180 minutes, and more preferably 3 to 60 minutes. Heating may be performed under reduced pressure as necessary. The drying temperature and drying time are not particularly limited; and they may be appropriately selected depending on the materials to be used.

As mentioned above, the component (d) may be added to the aforementioned conductive polymer composition, or the porous body which is separately impregnated in the conductive polymer composition may be impregnated in the solution of the component (d). Moreover, the component (d) may be added to the composition and then the porous body may further be impregnated in the solution of the component (d).

In other words, the conductive polymer-containing porous body obtained by the method for production according to an aspect of the present invention may include a component (d) which is added to the conductive polymer composition (hereinafter, sometimes referred to as component (d1)), and a component (d) in which the porous body is impregnated

after the impregnation in the conductive polymer composition (hereinunder, sometimes referred to as component (d2)). The components (d1) and (d2) may be the same as or different from each other. When these are different from each other, for example, the component (d1) is the compound represented by the aforementioned formula (5), and the component (d2) is the compound represented by the aforementioned formula (4).

[Porous body with solid electrolytic layer]

The layer composed of the conductive polymer formed inside the pores of the porous body and on the surface of the porous body by the aforementioned method for producing a conductive polymer-containing porous body, functions as a solid electrolytic layer.

A porous body with a solid electrolytic layer of the present aspect includes an oxide of a valve metal, wherein the porous body with a solid electrolytic layer includes a solid electrolytic layer comprising a polyaniline formed inside the pores of the porous body, and a solid electrolytic layer comprising a polyaniline coated on the outer portion of the porous body.

In the porous body with a solid electrolytic layer of the present aspect, a solid electrolytic layer is formed at both the inside the pores of the porous body and the outer portion of the porous body.

With the porous body with a solid electrolytic layer of the present aspect, since a solid electrolytic layer goes deeply in the pores of the porous body, a surface area of the pores of the porous body, coated with the solid electrolytic layer, is increased. Thus, the dielectric loss tangent of a solid electrolytic capacitor using it becomes small. Moreover, the equivalent series resistance (ESR) of a solid electrolytic layer capacitor using the porous body with a solid electrolytic layer of the present aspect becomes smaller, and also the capacitance becomes higher.

A solid electrolytic capacitor including a porous body with a solid electrolytic layer of the present aspect has an equivalent series resistance ESR of 17 mΩ or less.

[Method for producing solid electrolytic capacitor]

A method for producing a solid electrolytic capacitor of the present aspect including:

an immersion step (A) in which a part or all of an anode body being a porous body which includes the surface composed of an oxide of a valve metal and which is composed of a valve metal is immersed in a conductive polymer composition including a conductive polymer and a solvent,
a step (B) in which the anode body is taken out from the conductive polymer composition used in the immediately preceding immersion step, and it is retained for a predetermined retention time at a temperature which is lower than or equal to the boiling point of the solvent included in the conductive polymer composition used in the immediately preceding immersion step,
an immersion step (C) in which the part or all of the anode body which has been subjected to the retention step (B) is immersed in the conductive polymer composition which is the same as the conductive polymer composition used in the immediately preceding immersion step, or a conductive polymer composition including a different conductive polymer and solvent, and
a drying step (D) in which the anode body is taken out from the conductive polymer composition, and it is dried at a temperature exceeding the boiling point of the solvent to form a solid electrolytic layer composed of the conductive polymer on the anode body.

General methods for producing a solid electrolytic capacitor include a step of roughening the surface of an anode metal (valve metal), a step of forming a dielectric body film (a film of an oxide of a valve metal) on the surface of the roughened anode metal and a step of forming a solid electrolytic layer. In addition, a step of forming a cathode so as to sandwich the solid electrolytic layer and be in opposition with the anode is also included.

All the aforementioned steps may be performed through, or the step of immersing an existing product in which corresponding cathode and anode are formed (the anode body has a surface having already been roughened and is dried) in the conductive polymer composition may be performed.

The conductive polymer-containing porous body, which is obtained by the production method of the present aspect, and which is used in a solid electrolytic capacitor, has an anode body and a solid electrolytic layer. The anode body is a porous body having pores (i.e., being porous) on its surface. The anode body consists of a valve metal, and the surface thereof consists of an oxide of a valve metal. On such an anode body that has roughness on its surface, a solid electrolytic layer is formed. In the present invention, since a solid electrolytic layer goes deeply in the pores of the porous body, a surface area of the pores of the anode body (porous body), coated with the solid electrolytic layer, is increased, and the dielectric loss tangent of a capacitor containing the solid electrolytic capacitor is reduced. Moreover, in the present invention, by the increase of the surface area of the pores of an anode body (porous body) coated with the solid electrolytic layer, the equivalent series resistance (ESR) of the capacitor containing a solid electrolytic layer becomes smaller and

capacitance becomes higher.

This method for production will be explained below.

(Step of roughening the surface of an anode metal)

In this step, the surface of the anode metal (valve metal) of the solid electrolytic capacitor is roughened (etched) to enlarge the effective surface area. Alternatively, a porous body with an enlarged effective surface area is obtained by sintering a fine powder of an anode metal (valve metal).

Examples of the anode metal include valve metals such as aluminium, tantalum, niobium, titanium, hafnium, zirconium, zinc, tungsten, bismuth, and antimony, where aluminium or tantalum is preferred.

Surface roughening (etching) can be performed by known methods; a method of immersing in a hydrochloric acid liquid (chemical etching), and a method of electrolysis in an aqueous hydrochloric acid solution using aluminum as an anode (electro-chemical etching) may be used for example.

(Step of forming dielectric body film on surface of anode metal)

In this step, an oxide film of a dielectric body is formed on a roughened anode surface. This step is ordinarily performed by applying a voltage in the electrolytic liquid to anodize it (chemical forming). Thereby, a film composed of an anode metal oxide (dielectric body) is formed, and an anode body composed of a valve metal and an oxide thereof is obtainable.

Examples of the electrolytic liquid to be used include aqueous solutions containing, for example, adipic acid, citric acid, phosphoric acid and salts thereof. The anodization can be performed by known methods.

(Step of forming capacitor device)

Ordinarily, after the aforementioned anodization is performed, a capacitor device is formed using an anode electrode (an anode body composed of the valve metal and the oxide thereof) and a cathode electrode. The device shape is not particularly limited; a winding type of device or a laminated type of device are applicable.

In the case of a winding type, a capacitor device is formed by winding an anode electrode and cathode electrode via a separator. In the case of a laminated type, a capacitor device is formed by laminating a plurality of anode electrodes and a plurality of cathode electrodes on each other.

The forming of the capacitor device of this step can be performed by known methods.

(Step of immersing anode body in conductive polymer solution and drying it)

In the step, a solid electrolytic layer including a conductive polymer is formed inside the pores of and on the surface of an anode body by the following: immersing an anode body composed of a valve metal and an oxide thereof in a conductive polymer composition (step (A)); taking the anode body out from the conductive polymer composition used in the immersion step (A) and retaining it at a temperature which is lower than or equal to the boiling point of the solvent contained in the conductive polymer composition used in the immersion step (A) (step (B)); then re-immersing the anode body in a conductive polymer composition containing a conductive polymer and a solvent, where the composition is the same as or different to the conductive polymer composition used in the immersion step (A) (step (C)), and drying it.

In one embodiment, a cycle of the step (B) and the step (C) may be performed repeatedly multiple times.

In the case of repeatedly performing the cycle of the step (B) and the step (C) multiple times, the conductive polymer composition in which the anode body is immersed in each step (C) may be the same as the conductive polymer composition used in already-performed step (A) and step (C), or it may be different from the conductive polymer composition used in the already-performed step (A) and step (C).

The immersion method in a conductive polymer composition is not particularly limited as long as it is a method by which a conductive polymer can be fully impregnated inside the pores of an anode body; a method of immersing a capacitor device *per* se in a conductive polymer composition is preferable.

Other items of the step (A) to the step (C) can be performed in the same manner as in the aforementioned step (A) to step (C) included in the production of a conductive polymer-containing porous body. Thereby, since a solid electrolytic layer composed of a conductive polymer can be formed until the depths of the pores of an anode body, a surface area of a porous body coated with the conductive polymer is increased, and the dielectric loss tangent of a capacitor is decreased.

Moreover, by performing the aforementioned step (A) to step (C), since a surface area of a porous body coated with the conductive polymer is increased, the equivalent series resistance (ESR) of a capacitor is decreased, and moreover the electrostatic capacitance is increased.

Moreover, since sufficient capacitor properties can be acquired even with a fewer number of immersions than that

conventionally, the number of immersions in a conductive polymer composition (step (C)) can be reduced.

The conductive polymer composition is the same as that described in the aforementioned.

The drying temperature is a temperature higher than the boiling point of a solvent contained in the conductive polymer composition, which may be appropriately selected depending on the type of solvent; it is ordinarily 30 to 200°C, and preferably 100 to 180°C. The drying time is ordinarily 10 to 120 minutes, and preferably 30 to 90 minutes.

(External coating)

An external coating layer may be further formed on the anode body on which the solid electrolytic layer has been formed. When it is externally coated on the anode body, the contact with a cathode becomes good, which can thus decrease the equivalent series resistance (ESR) of the capacitor device. Moreover, when it is externally coated on the capacitor device, the capacitor device can be protected from effects due to external impact or outer air.

The external coating layer can be formed, for example, by immersing the anode body on which the solid electrolytic layer is formed in the composition for external coating layer formation, and thereafter drying it.

The composition for external coating layer formation is not particularly limited as long as it includes a conductive polymer and a solvent or dispersion medium. As the composition for external coating layer formation, for example, the same conductive polymer composition as those described in the method for producing a conductive polymer-containing porous body is suitably used.

The immersion method of an anode body in the composition for external coating layer formation is not particularly limited. The immersion time is ordinarily 1 to 30 minutes, and preferably 1 to 10 minutes.

The drying temperature is ordinarily 30 to 200°C, and preferably 100 to 180°C. The drying time is ordinarily 10 to 120 minutes, and preferably 30 to 90 minutes.

[Solid electrolytic capacitor]

The solid electrolytic capacitor of the present aspect is obtained by the aforementioned method for producing the solid electrolytic capacitor of the present aspect. Specifically included is an anode material (an anode body including a valve metal and an oxide thereof) containing a solid electrolyte including a conductive polymer (solid electrolytic layer).

In one embodiment, the dielectric loss tangent of the solid electrolytic capacitor may be appropriately selected depending, for example, on the type and shape of the capacitor to be produced; it may be, for example, 0.5 or less, 0.35 or less, 0.20 or less, or 0.10 or less.

The dielectric loss tangent is measured by the method described in the examples.

In one embodiment of the solid electrolytic capacitor of the present aspect, an equivalent series resistance ESR thereof is 17 mΩ or less.

A solid electrolytic capacitor of the present aspect can be used as a circuit device mounted on an electric or electronic circuit substrate and can be used particularly as a circuit device installed in a vehicle for example.

Examples

Production Example 1 (production of polyaniline complex 1)

32.4 g of "NEOCOL SWC" (sodium di-2-ethylhexyl sulfosuccinate, produced by DKS Co. Ltd.), 13.3 g of aniline, and 0.9 g of "Sorbon T-20" (non-ionic emulsifier having a polyoxy ethylene sorbitan fatty acid ester structure, produced by TOHO Chemical Industry Co., Ltd.) were added to a 1,000 mL of separable flask, and they were dissolved in 320.4 g of toluene. 450 g of an 8.5% by mass aqueous phosphoric acid solution was added thereto. A reaction liquid having two liquid phases of toluene and water was stirred, and the internal temperature of the reaction liquid was cooled to 5°C. At the point in time when the internal temperature of the reaction liquid attained 5°C, a solution in which 39.3 g of APS (ammonium persulfate) was dissolved in 90.2 g of an 8.5% by mass aqueous phosphoric acid solution was added by using a dropping funnel while stirring the reaction liquid, and it was stirred for 4 hours while keeping the solution internal temperature at 5°C. After the stirring was stopped, the contents were moved to a liquid-separating funnel, and they were left to stand to separate the water phase and the toluene phase (organic phase). After the separation, the toluene phase (organic phase) was washed once with 180.3 g of an 8.5% by mass aqueous phosphoric acid solution and was washed 5 times with 328.0 g of ion exchanged water to thereby obtain a polyaniline complex toluene solution. This solution was moved to an evaporator, heated in a warm bath at 60°C, and pressure was reduced to thereby remove a volatile component by distilling off, and thereby a polyaniline complex 1 (protonated polyaniline) was obtained.

The weight average molecular weight (Mw) of the polyaniline in the polyaniline complex 1 was 73,000.

The weight average molecular weights of the polyaniline in the polyaniline complex 1 and the later-described polyaniline complex 2 were measured as follows.

1.65 to 1.85 g of lithium bromide was dissolved in 2,000 mL of NMP (N-methyl-2-pyrrolidone) to prepare an NMP solution of 0.01 M of lithium bromide. 14 μL of triethylamine was added to 10 mL of this NMP solution of 0.01 M of lithium bromide, which was stirred and dissolved to obtain a homogeneous solution. 50 μL of the polyaniline complex toluene solution was further dropped, stir-mixed and then passed through a 0.45 μm filter, thereby preparing a sample for gel permeation chromatography (GPC).

The GPC measurement was performed by the measurement conditions below using GPC columns (produced by Showa Denko K.K. "Shodex KF-806M", two connected columns).

Solvent: 0.01 M of LiBr-containing NMP
Flow rate: 0.70 mL/minute
Column temperature: 60°C
Injection amount: 100 μL
UV detection wavelength: 270 nm

The weight average molecular weights obtained by the aforementioned method are polystyrene (PS) equivalent values.

The doping ratio of a proton donor (sodium di-2-ethylhexyl sulfosuccinate) to polyaniline was 0.36.

Production Example 2 (production of polyaniline complex 2)

10.13 g of "NEOCOL SWC" (sodium di-2-ethylhexyl sulfosuccinate, produced by DKS Co. Ltd.), 4.17 g of aniline, and 0.32 g of "Sorbon T-20" (non-ionic emulsifier having a polyoxy ethylene sorbitan fatty acid ester structure, produced by TOHO Chemical Industry Co., Ltd.) were added to a 1,000 mL of separable flask, and they were dissolved in 238.37 g of toluene. 353.70 g of a 17% by mass aqueous phosphoric acid solution was added thereto. A reaction liquid having two liquid phases of toluene and water was stirred, and the internal temperature of the reaction liquid was cooled to -2°C. At the point in time when the internal temperature of the reaction liquid attained -2°C, a solution of which 12.3 g of APS (ammonium persulfate) was dissolved in 48 g of a 17% by mass aqueous phosphoric acid solution was added by using a dropping funnel while stirring the reaction liquid, and it was stirred for 18 hours while keeping the solution internal temperature at -2°C.

After the stirring was stopped, the contents were moved to a liquid-separating funnel, and they were left to stand to separate the water phase and the toluene phase (organic phase). After the separation, the toluene phase (organic phase) was washed once with 59.4 g of an 8.5% by mass aqueous phosphoric acid solution and was washed 3 times with 108.14 g of ion exchanged water to thereby obtain a polyaniline complex toluene solution. This solution was moved to an evaporator, heated in a warm bath at 60°C, and pressure was reduced to thereby remove a volatile component by distilling off, and thereby a polyaniline complex 2 (protonated polyaniline) was obtained. The weight average molecular weight (Mw) of the polyaniline of the polyaniline complex 2 was 112,000.

The doping ratio of a proton donor (sodium di-2-ethylhexyl sulfosuccinate) to polyaniline was 0.36.

Production Example 3 (production of anode body)

Anodic oxidization was performed on twenty pellet-shaped tantalum powder sintered compacts (porous body of 1.31 mm × 2.55 mm × 2.30 mm) made from a tantalum powder having a specific capacity of 250,000 μFV/g, by applying a voltage up to 8.8 V in an electrolyte of 0.5% phosphoric acid, to form a dielectric body (an oxide of tantalum) on the surface of the tantalum powder sintered compacts (porous bodies); thereby anode bodies for a tantalum capacitor were obtained.

The capacitance of the anode body in liquid was measured using a platinum black electrode as the counter electrode and using 10% by weight phosphoric acid as an electrolytic liquid. The capacitance of the anode body in liquid was 1341 μF.

Example 1

(1) Preparation of conductive polymer composition for solid electrolytic layer formation

15 g of isopropyl alcohol (component (b); boiling point 82.5°C) (produced by FUJIFILM Wako Pure Chemical Corporation), 32 g of p-tert-amyl phenol (component (e)) (produced by FUJIFILM Wako Pure Chemical Corporation), and 53 g of 4-methyltetrahydropyran (component (b); boiling point 105°C) (produced by Tokyo Chemical Industry Co., Ltd.) were mixed by stirring until becoming homogeneous to prepare a mixed solvent A.

5 g of the polyaniline complex 1 (component (a)) obtained by Production Example 1 was dissolved in 95 g of the mixed solvent A to thereby obtain a polyaniline complex solution A (polyaniline complex concentration: 5% by mass).

10 g of 2-naphthalenesulfonic acid hydrate (component (d)) (produced by Tokyo Chemical Industry Co., Ltd.) was dissolved in 90 g of isopropyl alcohol (component (b); boiling point 82.5°C) (produced by FUJIFILM Wako Pure Chemical Corporation), and a heat-resistant stabilizer solution A was thereby prepared.

0.11 g of the heat-resistant stabilizer solution A was added to 10 g of the polyaniline complex solution A (polyaniline complex concentration: 5% by mass), and the solution was mixed by stirring to thereby obtain a conductive polymer composition A.

(2) Formation of solid electrolytic layer

[First immersion]

The anode body obtained in Production Example 3 was fixed to and hung down from a metal bar so that the length in the height direction was 2.3 mm, immersed in the conductive polymer composition A from the lower edge of the anode body up to 1/3 of the height, and it was retained for 3 minutes. Then, the anode body was immersed in the conductive polymer composition A from the lower edge of the anode body up to 2/3 of the height, and it was retained for 2 minutes. Subsequently, the entirety of the anode body was immersed in the conductive polymer composition A, and it was retained for 1 minute.

The first immersion of the anode body was performed as the above.

Then, the anode body was pulled up from the conductive polymer composition A, and was retained for 1 minute at room temperature, in a state where the entirety of the anode body was exposed to the air.

[Second immersion]

Next, the anode body was immersed in the conductive polymer composition A, from the lower edge of the anode body up to 1/3 of the height, and it was retained for 3 minutes. Then, the anode body was immersed in the conductive polymer composition A from the lower edge of the anode body up to 2/3 of the height, and it was retained for 2 minutes. Subsequently, the entirety of the anode body was immersed in the conductive polymer composition A, and it was retained for 1 minute.

The second immersion of the anode body was performed as the above.

Next, the anode body was pulled up and taken out from the conductive polymer composition A, dried at 40°C for 7 minutes, and then further dried at 140°C for 30 minutes, to thereby form a solid electrolytic layer.

(3) Preparation of conductive polymer composition for external coating

30 g of 3-methoxy-3-methyl butanol (component (b)) (produced by Tokyo Chemical Industry Co., Ltd.), 10 g of ethylene glycol (component (b)) (produced by FUJIFILM Wako Pure Chemical Corporation), 40 g of p-tert-amyl phenol (component (e)) (produced by FUJIFILM Wako Pure Chemical Corporation), and 20 g of "KYOWASOL C900" (component (b)) (produced by KH Neochem Co., Ltd.) were mixed by stirring until becoming homogeneous to prepare a mixed solvent B.

10 g of the polyaniline complex 2 (component (a)) obtained by Production Example 2 was dissolved in 95 g of the mixed solvent B, and thereby a polyaniline complex solution B (concentration of polyaniline complex 2: 10% by mass) was obtained.

10 g of 2-naphthalenesulfonic acid hydrate (component (d)) (produced by Tokyo Chemical Industry Co., Ltd.) was dissolved in 90 g of 3-methoxy-3-methyl butanol (component (b); boiling point 174°C) (produced by Tokyo Chemical Industry Co., Ltd.), and a heat-resistant stabilizer solution B was thereby prepared.

0.22 g of the heat-resistant stabilizer solution B was added to 10 g of the polyaniline complex solution B (concentration of polyaniline complex 2: 10% by mass) and mixed by stirring to thereby obtain a conductive polymer composition B for external coating.

(4) Formation of external coating layer

First, the entirety of an anode body with a solid electrolytic layer formed was immersed in 4-sulfophthalic acid solution (4-sulfophthalic acid concentration: 1% by mass) in which 4-sulfophthalic acid (produced by Tokyo Chemical Industry Co., Ltd.) was dissolved in isopropyl alcohol, and it was retained for 10 minutes.

Then, the anode body was pulled up and taken out from the 4-sulfophthalic acid solution and was dried at 150°C

for 60 minutes.

Subsequently, the entirety of the anode body with a solid electrolytic layer formed was immersed in the conductive polymer composition B for external coating and was retained for 5 minutes.

Next, the anode body was pulled up and taken out from conductive polymer composition B, dried at 80°C for 60 minutes, and then further dried at 170°C for 30 minutes, and thereby performed was the external coating of the anode body with a solid electrolytic layer formed.

Then, the entirety of the anode body was immersed in a 4-sulfophthalic acid solution (4-sulfophthalic acid concentration: 1% by mass) in which 4-sulfophthalic acid (produced by Tokyo Chemical Industry Co., Ltd.) was dissolved in isopropyl alcohol, and it was retained for 10 minutes.

Next, the anode body was pulled up and taken out from the 4-sulfophthalic acid solution and dried at 150°C for 60 minutes to obtain an anode body with a solid electrolytic layer.

<Evaluation of electrical properties>

0.2 g of a carbon paste "TU-10S" (produced by Asahi Chemical Research Laboratory Co., Ltd.) was diluted with 7.8 g of diethylene glycol monoethyl ether (produced by Tokyo Chemical Industry Co., Ltd.) and mixed by stirring to obtain a carbon paste solution. The anode body with a solid electrolytic layer prepared in Example 1 was immersed in the carbon paste solution for 10 seconds and was thereafter dried at 150°C for 30 minutes.

Subsequently, 0.8 g of a silver paste "4922N" (produced by DuPont Japan) was diluted with 0.4 g of n-butyl acetate (produced by FUJIFILM Wako Pure Chemical Corporation) and mixed by stirring to obtain a silver paste solution. The aforementioned anode body was immersed in the silver paste solution for 10 seconds, thereafter dried at 40°C for 30 minutes, and was further dried at 105°C for 60 minutes to obtain a capacitor.

In the capacitor obtained in the aforementioned, the electrostatic capacitance (Cap) and dielectric loss (tan $\delta$) at a frequency of 120 Hz, and the equivalent series resistance (ESR) at a frequency of 100 kHz were measured by employing the LCR meter "Precision LCR Meter E4980A" (produced by Agilent Technologies Japan, Ltd.). The evaluation results are shown in Table 1.

The "exhibited capacitance rate" in Table 1 is a value in which the measured value of the electrostatic capacitance (Cap) of each capacitor device including a solid electrolytic layer formed using the conductive polymer, is divided by the capacitance in liquid; the higher the "exhibited capacitance rate" is, the more excellent the capacitor properties are. The exhibited capacitance rate is calculated by the following formula ($\alpha$).

Exhibited capacitance rate [%] = electrostatic capacitance (Cap) of solid electrolytic capacitor / capacitance in liquid $\times$ 100 (a)

Example 2

In the step of "(2) Formation of solid electrolytic layer" described in Example 1, the second immersion of an anode body in the conductive polymer composition A was performed, and thereafter the anode body was pulled up from the conductive polymer composition A and was retained for 1 minute at room temperature in a state where the entirety of the anode body was exposed to the air.

Subsequently, the anode body was immersed in the conductive polymer composition A from the lower edge of the anode body up to 1/3 of the height, and it was retained for 3 minutes. Then, the anode body was immersed in the conductive polymer composition A from the lower edge of the anode body up to 2/3 of the height and was retained for 2 minutes. Subsequently, the entirety of the anode body was immersed in the conductive polymer composition A and was retained for 1 minute.

Next, the anode body was pulled up and taken out from the conductive polymer composition A, dried at 40°C for 7 minutes, and then further dried at 140°C for 30 minutes, to thereby form a solid electrolytic layer.

The steps other than the above were performed in the same manner as described in Example 1 to obtain an anode body with a solid electrolytic layer.

Using the obtained anode body, a capacitor was fabricated in the same manner as described in Example 1, and the electrical properties were evaluated. The evaluation results are shown in Table 1.

Comparative Example 1

In the step of "(2) Formation of solid electrolytic layer", the first immersion of an anode body in the conductive polymer composition A was performed, and thereafter the anode body was pulled up and taken out from the conductive polymer composition A, dried at 40°C for 7 minutes and then further dried at 140°C for 30 minutes to form a solid electrolytic layer.

The steps other than the above were performed in the same manner as described in Example 1 to obtain an anode body with a solid electrolytic layer.
Using the obtained anode body, a capacitor was fabricated in the same manner as described in Example 1, and the electrical properties were evaluated. The evaluation results are shown in Table 1.

Table 1

| | Solid electrolytic layer forming conditions | | | | tan δ | Cap [μF] | Exhibited capacitance rate [%] | ESR [mΩ] |
|---|---|---|---|---|---|---|---|---|
| | Number of immersions | Immersion method | Number of times of retention in atmosphere | Retention time | | | | |
| Example 1 | Twice | in stages (3 minutes + 2 minutes + 1 minute) | Once | 1 minute | 0.224 | 729 | 54 | 13 |
| Example 2 | Thrice | in stages (3 minutes + 2 minutes + 1 minute) | Twice | 1 minute | 0.193 | 734 | 55 | 14 |
| Comparative Example 1 | Once | in stages (3 minutes + 2 minutes + 1 minute) | Zero | - | 0.378 | 689 | 51 | 37 |

Production Example 4 (production of anode body)

Anodic oxidization was performed on twenty pellet-shaped tantalum powder sintered compacts (porous body of 1.71 mm × 3.01 mm × 2.89 mm) made from a tantalum powder having a specific capacity of 70,000 μFV/g, by applying a voltage up to 8.8 V in an electrolyte of 0.5% phosphoric acid, to form a dielectric body (an oxide of tantalum) on the surface of the tantalum powder sintered compacts (porous bodies); thereby anode bodies for a tantalum capacitor were obtained.
The capacitance of the anode body in liquid was measured using a platinum black electrode as the counter electrode and using 10% by weight of phosphoric acid as an electrolytic liquid. The capacitance of the anode body in liquid was 961 μF.

Example 3

A solid electrolytic layer was formed on the anode body in the same manner as described in Example 1, except for using the anode body obtained in Production Example 4; and fixing the anode body to and hanging it down from a metal bar so that the length in the height direction was 2.89 mm to perform the immersion of the anode body in the "(2)Formation of solid electrolytic layer".
The steps other than the above were performed in the same manner as described in Example 1 to obtain an anode body with a solid electrolytic layer.
Using the obtained anode body, a capacitor was fabricated in the same manner as described in Example 1, and the electrical properties were evaluated. The evaluation results are shown in Table 2.

Comparative Example 2

A solid electrolytic layer was formed on the anode body in the same manner as described in Comparative Example 1, except for using the anode body obtained in Production Example 4.
The steps other than the above were performed in the same manner as described in Comparative Example 1 to obtain an anode body with a solid electrolytic layer.
Using the obtained anode body, a capacitor was fabricated in the same manner as described in Example 1, and the electrical properties were evaluated. The evaluation results are shown in Table 2.

Table 2

| | Solid electrolytic layer | | | | tan δ | Cap [μF] | Exhibited capacitance rate [%] | ESR [mΩ] |
|---|---|---|---|---|---|---|---|---|
| | Number of immersions | Immersion method | Number of times of retention in atmosphere | Retention time | | | | |
| Example 3 | Twice | in stages (3 minutes + 2 minutes + 1 minute) | Once | 1 minute | 0.06 | 780 | 81 | 13 |
| Comparative Example 2 | Once | in stages (3 minutes + 2 minutes + 1 minute) | - | - | 0.11 | 726 | 76 | 18 |

As shown in Tables 1 and 2, in Examples 1 to 3, since the first immersion of the anode body was performed, thereafter the anode body was exposed to the air at a temperature which is lower than or equal to the boiling point of the solvent (82.5°C) and then the second immersion was performed, the dielectric loss tangent of the capacitor was suppressed to a small value, the equivalent series resistance (ESR) was small, and a high exhibited capacitance ratio was obtained.

This is presumably because the conductive polymer composition smoothly permeated into the pores of the anode body during the second and subsequent immersions, a conductive polymer film was densely formed on the porous surface of the anode body, and the film area on the porous surface increased.

Industrial Applicability

Solid electrolytic capacitors obtained by the production method of the present invention can be used as a circuit device mounted on an electric or electronic circuit substrate, particularly as a circuit device installed in a vehicle for example.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification and the specification of Japanese application(s) on the basis of which the present application claims Paris convention priority are incorporated herein by reference in its entirety.

## Claims

**1.** A method for producing a conductive polymer-containing porous body, comprising:

an immersion step (A) in which a part or all of a porous body comprising an oxide of a valve metal is immersed in a conductive polymer composition comprising a conductive polymer and a solvent,
a step (B) in which the porous body is taken out from the conductive polymer composition used in the immediately preceding immersion step, and it is retained for a predetermined retention time at a temperature which is lower than or equal to the boiling point of the solvent included in the conductive polymer composition used in the immediately preceding immersion step, and
an immersion step (C) in which the part or all of the porous body which has been subjected to the retention step (B) is immersed in the conductive polymer composition which is the same as the conductive polymer composition used in the immediately preceding immersion step, or a conductive polymer composition comprising a different conductive polymer and solvent.

**2.** The method for producing a conductive polymer-containing porous body according to claim 1, which comprises immersing a non-immersed part of the porous body in the conductive polymer composition after the part the porous body is immersed in the conductive polymer composition and the immersion state is retained.

3. The method for producing a conductive polymer-containing porous body according to claim 1 or 2, wherein the retention time is 1 second or more and less than 10 minutes in the step (B).

4. The method for producing a conductive polymer-containing porous body according to any one of claims 1 to 3, wherein the step (B) and the step (C) are repeated multiple times.

5. The method for producing a conductive polymer-containing porous body according to any one of claims 1 to 4, wherein the conductive polymer is one or more members selected from polyaniline, polyaniline derivative, polythiophene, polythiophene derivative, polypyrrole and polypyrrole derivative.

6. The method for producing a conductive polymer-containing porous body according to any one of claims 1 to 5, wherein the conductive polymer is a polyaniline complex in which a polyaniline is doped with a proton donor.

7. The method for producing a conductive polymer-containing porous body according to any one of claims 1 to 6, wherein the conductive polymer composition further comprises a phenolic compound.

8. The method for producing a conductive polymer-containing porous body according toany one of claims 1 to 7, wherein the conductive polymer composition further comprises a heat-resistant stabilizer.

9. A conductive polymer-containing porous body obtained by the method for producing a conductive polymer-containing porous body according to any one of claims 1 to 8.

10. A method for producing a solid electrolytic capacitor, comprising:

an immersion step (A) in which a part or all of an anode body being a porous body which comprises the surface composed of an oxide of a valve metal and which is composed of a valve metal is immersed in a conductive polymer composition comprising a conductive polymer and a solvent,
a step (B) in which the anode body is taken out from the conductive polymer composition used in the immediately preceding immersion step, and it is retained for a predetermined retention time at a temperature which is lower than or equal to the boiling point of the solvent included in the conductive polymer composition used in the immediately preceding immersion step,
an immersion step (C) in which the part or all of the anode body which has been subjected to the retention step (B) is immersed in the conductive polymer composition which is the same as the conductive polymer composition used in the immediately preceding immersion step, or a conductive polymer composition comprising a different conductive polymer and solvent, and
a drying step (D) in which the anode body is taken out from the conductive polymer composition, and it is dried at a temperature exceeding the boiling point of the solvent to form a solid electrolytic layer composed of the conductive polymer on the anode body.

11. The method for producing a solid electrolytic capacitor according to claim 10, which further comprises immersing the anode body on which the solid electrolytic layer has been formed in a conductive polymer composition comprising a conductive polymer and a solvent, and thereafter drying it to form an external coating layer.

12. A solid electrolytic capacitor obtained by the method for producing a solid electrolytic capacitor according to claim 10 or 11.

13. A porous body with a solid electrolytic layer comprising an oxide of a valve metal,

wherein the porous body with a solid electrolytic layer comprises a solid electrolytic layer comprising a polyaniline formed inside the pores of the porous body, and
a solid electrolytic layer comprising a polyaniline coated on the outer portion of the porous body.

14. A solid electrolytic capacitor comprising the porous body with a solid electrolytic layer according to claim 13, wherein an equivalent series resistance ESR thereof is 17 mΩ or less.

Fig. 1

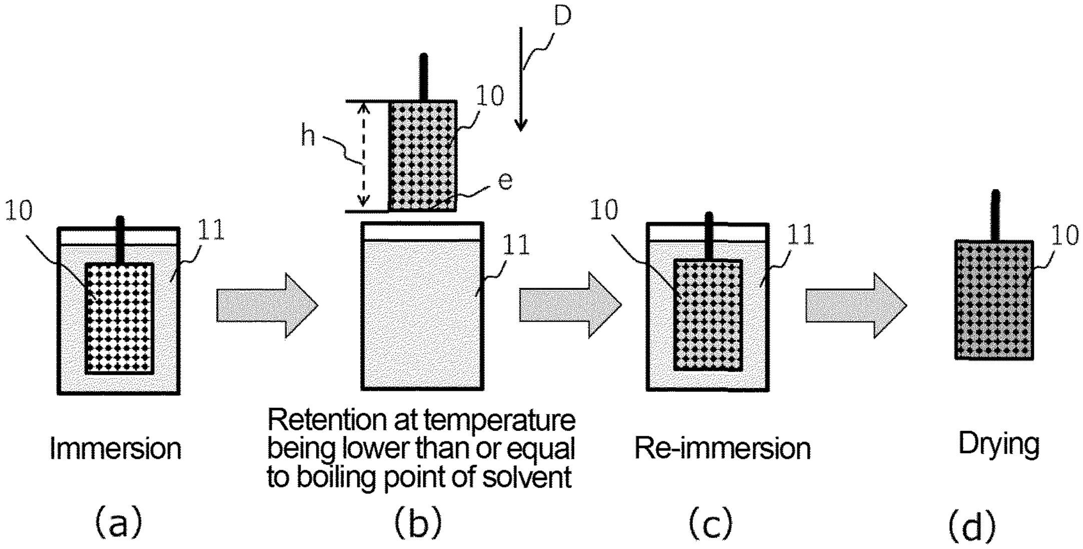


Fig. 2

< Conventional technique >

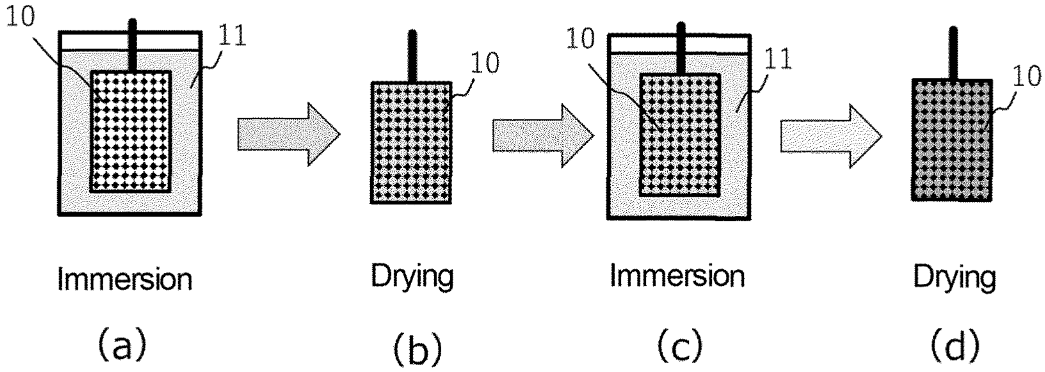

## INTERNATIONAL SEARCH REPORT

International application No.
**PCT/JP2023/037836**

### A. CLASSIFICATION OF SUBJECT MATTER

***H01G 9/00***(2006.01)i; ***H01G 9/028***(2006.01)i
FI: H01G9/00 290H; H01G9/028 G

According to International Patent Classification (IPC) or to both national classification and IPC

### B. FIELDS SEARCHED

Minimum documentation searched (classification system followed by classification symbols)

H01G9/00; H01G9/028

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2018-206868 A (TOKIN CORP) 27 December 2018 (2018-12-27) claims, paragraphs [0020]-[0025], [0040], [0071]-[0079] | 1-5, 7-14 |
| Y | claims, paragraphs [0020]-[0025], [0040], [0071]-[0079] | 6 |
| Y | WO 2017/150407 A1 (IDEMITSU KOSAN CO) 08 September 2017 (2017-09-08) paragraph [0031] | 6 |
| A | JP 2014-041933 A (MURATA MFG CO LTD) 06 March 2014 (2014-03-06) entire text, all drawings | 1-14 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 December 2023** | **16 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/037836**

| Patent document cited in search report | Publication date (day/month/year) | Patent family member(s) | Publication date (day/month/year) |
|---|---|---|---|
| JP 2018-206868 A | 27 December 2018 | (Family: none) | |
| WO 2017/150407 A1 | 08 September 2017 | US 2019/0062501 A1<br>paragraphs [0088]-[0090] | |
| JP 2014-041933 A | 06 March 2014 | US 2014/0055912 A1<br>entire text, all drawings | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 2014030046 A
- JP 2021534576 A
- JP 2021534579 A
- JP 3384566 B

### Non-patent literature cited in the description

- *Polymer Engineering & Science*, 1974, vol. 14, 147-154